# EUROPEAN PATENT SPECIFICATION

(11) **EP 3 115 809 B1**
(45) Date of publication and mention of the grant of the patent: **28.04.2021**
(21) Application number: 15175559.2
(22) Date of filing: 06.07.2015
(51) Int. Cl.: G01V 5/00

(54) **A METHOD OF SECURITY SCANNING OF CARRY-ON ITEMS, AND A SECURITY SCANNING SYSTEM OF CARRY-ON ITEMS**
VERFAHREN ZUR SICHERHEITSABTASTUNG VON HANDGEPÄCKSTÜCKEN UND SICHERHEITSABTASTSYSTEM VON HANDGEPÄCKSTÜCKEN
PROCÉDÉ DE BALAYAGE DE SÉCURITÉ D'ARTICLES À BAGAGES À MAIN ET SYSTÈME DE BALAYAGE DE SÉCURITÉ D'ARTICLES À BAGAGES À MAIN

(43) Date of publication of application: 11.01.2017
(73) Proprietor: Exruptive A/S, 2640 Hedehusene (DK)
(72) Inventor: POULSEN, Henning Friis, 4000 Roskilde (DK); OLSEN, Ulrik Lund, 2880 Bagsværd (DK)
(74) Representative: Inspicos P/S

(56) References cited:
- WO-A1-2010/138607
- WO-A2-2006/074431
- US-A- 4 020 346
- US-A1- 2006 098 773
- US-A1- 2009 116 617
- US-B1- 6 438 209

## Description

The present invention relates to a method of security scanning of carry-on items, according to claim 1.

A method of this kind is described in WO 03/065077 where the carry-on items are scanned one after the other. The scanning is thus performed on a single carry-on item, and the carry-on items disclosed are all carry-on luggage, viz. hand luggage, having well-defined outer side walls. The individual carry-on item is scanned in the first stage module, and if the analysis determines that the contents are without contraband items, then a diverter device may direct the carry-on item to a discharge path. If the carry-on item is not diverted it continues to further scanning in the second stage module. The scanning in the first stage module is a CT scanning involving a ring-shaped detector, and the X-ray source rotates in ring around the carry-on item at considerable speed, and the scanning of the carry-on item involves generating at least 1000 projections of 2D image data, and the reconstruction of the 3D representation can be performed with accuracy due to the high number of 2D projections.

CT scanning has a disadvantage in that the first stage module is very large and heavy due to the rotating mechanism used for the scanning. A CT scanner is typically located on the ground floor or in a basement where solid foundation is available, and the CT scanner also requires heavy shielding in order not to be a health risk to people.

Scanning of carry-on items is different from scanning checked-in luggage. Checked-in luggage can be scanned at a remote location because the luggage items are transported in their own flow and along their own transport path, without any physical proximity to the person to whom the luggage item belongs. Scanning of checked-in luggage may thus be performed at a location suitable for the scanning equipment, and it does not so much matter if the scanning equipment is large and heavy. Scanning of checked-in luggage can be performed at any convenient time between checking-in of the luggage item and delivery of the scanned luggage, such as at an airplane before it departs. There will typically be at least 20 minutes available for routing the luggage item and for the scanning, sometimes even about an hour.

Carry-on items follow the person to whom the carry-on items belong, because the person transports the carry-on items along the path of the person. When security checking is to be performed, the person is temporarily delivering the carry-on items to the checking facility, and the person waits until the checking of the carry-on items is completed, and then the person receives the carry-on items and may continue onwards together with the carry-on items. The security scanning of carry-on items is thus preferably to be performed immediately when the person delivers the carry-on items for the security check, and it is to be performed in vicinity of the person.

For personal safety reasons the CT scanning described in WO 03/065077 requires that the equipment is distant from the person to whom the carry-on item belongs, and although this may find a solution where the scanning equipment is located at a floor below where the person is delivering and receiving the carry-on item, such a solution requires space.

Scanning of carry-on items has for years been performed without the step of reconstructing the 3D representation of the carry-on items. An example of this is given in US 5,600,303 where carry-on items are received and scanned in a first stage module using at least one X-ray source and first detectors to conduct transmission contrast radiography generating a projection of two-dimensional (2D) image data of the carry-on items. The 2D image can be enhanced, such as by edge sharpening and contrast enhancement, and be analyzed by computer for possible threats, and then an operator views the enhanced 2D image and determines whether further scanning is required, and if required, the carry-on item is scanned in a second stage module using at least one X-ray source and at least one second detector. The first stage module can be of small and simple construction, and it may be properly shielded without any great difficulty. But an operator is required to view the 2D image.

In WO 2006/074431 it is suggested to keep carry-on items on the cart used to transport them and pass the cart with the carry-on items through an X-ray scanning system. There is only a single stage module, and the detectors in this module may be L-shaped or linear. The captured 2D images are analyzed by a processing unit for threats, and if no threat is found after the scanning in the single stage module, the cart is cleared and returned to the person to whom the carry-on items belong. However, if a potential threat is found, then the image is sent to a workstation where security personnel can view the image and make a determination of whether the articles in the cart need to be hand searched.

Other relevant technology may be seen in US2006/098773, WO2006/074431, US6438209, WO2010/138607, US4020346 and US2009/11617.

It is an object of the present invention to improve the security scanning of carry-on items.

In a first aspect, the invention relates to the method of claim 1.

With a view to this, in the initially mentioned method of security scanning of carry-on items according to the present invention, the carry-on items in step a) are received as a group of carry-on items on a carrier and are scanned simultaneously as a group in step b), and e) a group of carry-on items determined in step d) to have at least one local area requiring further scanning is further scanned in a second stage module, in which the group of carry-on items and a X-ray source and a focusing device are mutually positioned so that a measuring position is in line with the local area requiring further scanning, and the X-ray source emits photons in a polychromatic X-ray beam, which photons are focussed towards the measuring position by the focusing device, and at least one second detector detects diffracted X-rays from the local area.

The carry-on items are received as a group on a carrier and are scanned simultaneously as a group, and this simplifies the handling of carry-on items and the scanning, as it is avoided to separate the individual carry-on items and avoided to pass them one after another trough scanning as individual objects scanned one by one. It is an improvement in handling and faster scanning is achieved by simultaneously scanning a group of carry-on items on a carrier.

The scanning in the second-stage module is performed on the individual local area requiring further scanning, and if there is more than one such local area in a group of carry-on items, then each local area is separately scanned, either one local area after the other by the same X-ray source and focusing device and second detector, or two or more local areas simultaneously in case the second-stage module is provided with two or more sets of X-ray source, focusing device and second detector(s). The simultaneous scanning may possibly be followed by one or more subsequent scans. If for instance, the group of carry-on items includes 5 local areas requiring further scanning and the second-stage module is provided with two sets of X-ray source, focusing device and second detector, then scanning is performed as three subsequent scans, two of which involve simultaneous scanning of two local areas.

An advantage of scanning a local area only, is that the X-ray source can have less power and yet provide a X-ray beam of the desired energy flux density, because the dimensions of the local area are small, such as a width and a breadth of less than 5 mm by 5 mm, and the X-ray beam may even illuminate only a portion of the local area. A X-ray source of low power, such as a power in the range from 0.5 kW to 4 kW, requires less shielding and is easier to install in a second-stage module located near the transport path of the persons to which the groups of carry-on items belong.

The focusing of the photons by the focusing device increases the flux density of the incident photons at the measuring position, and the increase in flux density leads to a corresponding decrease in the required measuring time. The polychromatic X-ray beam from the X-ray source is emitted in divergent shape, and in such a divergent shape the flux density of photons decreases with the square of the distance to the X-ray source. The focusing device captures the whole or a part of the divergent shaped beam from the X-ray source and focuses the photons in the beam towards the measuring position. From the exit of the focusing device the flux density of photons in the polychromatic X-ray beam increases or is substantially constant with increasing distance from the focusing device towards the measuring position.

It is possible to use only the second detector. However, it is also possible to arrange a third detector to detect X-rays in the direct beam from the local area. The third detector detects the direct beam after passing through the measuring position within the group of carry-on items and thus accounts for the absorption of X-rays at the specific location where the X-ray beam passes through the group of carry-on items. This absorption can be utilized to correct the diffracted X-rays detected on the second detector for the effect of absorption.

Preferably the photons are guided by at least one tube-shaped member in the focusing device. The tube shaped member may be able to capture a larger portion of the divergent shaped beam, and thus - for any given power of the X-ray source - provide a higher flux density of photons at the measuring position than is possible with alternative collimation devices. Such an alternative in form of a set of consecutive slits may be used to guide photons in the focusing device so that the cross-section of the X-ray beam is substantially constant when distance from the source to the measuring position varies within the group of carry-on items. The slits cut-off the outer portions of the beam and let a central portion pass through. The precise focusing minimizes diffraction from areas around the local area requiring further scanning.

Liquids and gels typically cause less diffractions per volume area than a solid substance. In order to bring down the time required for the scanning, when gels or liquids are scanned, the focusing device adjusts the focusing so that the measuring position has a larger cross-section when the local area contains liquids or gels than when the local area contains a solid substance. As an alternative to using such an adjustable focusing device, it is possible to apply two focusing devices where one provides a measuring position having a larger cross-section than the measuring position of the other focusing device.

It is possible to use stationary scanning equipment and then shift the position of the group of carry-on items, but preferably the X-ray source and the focusing device at one side of the measuring position and the at least one second detector at the opposite side of the measuring position are interconnected and movable as a unit during positioning in relation to a single local area requiring further scanning. An advantage of adjusting the position of the scanning equipment is that the group of carry-on items are handled as gently as possible. The scanning equipment is easily and quickly shifted between measuring positions.

The present invention also relates to a carry-on items security scanning system according to claim 5. With respect to effects, reference is made to the above-mentioned effects of the method according to the invention.

In an embodiment the focusing device comprises at least one tube-shaped member through which the photons are guided. In a further development the at least one tube-shaped member is surface coated. The surface coating causes reflection of a higher portion of the photons within the tube-shaped member and thus results in a higher flux density at the measuring position.

In an embodiment the at least one tube-shaped member is surface coated with a material having a density of at least 10 g/cm³, preferably a density of at least 16 g/cm³. The high density of the coating improves the ability of the coating to reflect photons.

In an embodiment the at least one tube-shaped member is surface coated with at least one material, or a mixture of materials, selected from the group comprising gold, platinum, iridium, tungsten, silver, palladium, rhodium, ruthenium and molybdenum.

In a further development, the at least one tube-shaped member is surface coated with a multilayer coating comprising at least one layer of a material having a density of at the most 4 g/cm³, and preferably at the most 2.5 g/cm³, such as at least one material, or a mixture of materials, selected from the group comprising silicon, boron carbide and carbon.

The tubular member can be a capillary member, and in an embodiment the focusing device has only a single capillary member. In another embodiment the focusing device comprises a plurality of singular capillary members, which can be bundled in a single bundle or in several bundles. In another embodiment the focusing device comprises a polycapillary member through which the photons are guided. The polycapillary member is a fixed body in which many capillaries are shaped. The polycapillary member can collect a large portion of the fan-shaped beam and focus all capillaries at the measuring position.

In an embodiment the X-ray source in the second stage module has a nominal tube voltage of at least 110 kV. Although it is possible that the nominal tube voltage is e.g. 40 kV, the X-ray beam is capable of penetrating through more material when the tube voltage is at least 110 kV, and preferably at least 140 kV. The group of carry-on items may comprise several items, and if for instance three items are overlapping in the beam path from the focusing device to the second detector then it is an advantage with high nominal tube voltage.

In an embodiment the X-ray source in the second stage module is air-cooled and is without water-cooling. This embodiment is of simple design because air is readily at hand and an air intake can suitably be arranged. The weight of the X-ray source and associated housing and mounting is lower when air-cooling is used and water cooling can be dispensed with, and this is in particular an advantage when the source is movably mounted in a frame.

In an embodiment the focussed X-ray beam at the measuring position has a largest cross-sectional dimension in the range of from 4 µm to 500 µm. The diffractions thus originate in a very small volume of material and the diffractions on the second detector are thus detected with very low noise and low degree of smearing, and this improved quality of the detections allows for shortening the time required for a scan, or allows improved validity in the determination of the type of material in the scanned volume.

In an embodiment the at least one second detector has at least dual energy resolution. The at least dual energy resolution provides additional information as to the nature of the materials in the carry-on items and allows improved separation into individual carry-on items in the group of carry-on items on the carrier. Although it is possible in an embodiment to utilize a second detector having no energy resolution, a second detector with energy resolution is preferred. A second detector with multi-energy resolution is preferred, and such a second detector may for example have an acquisition of 1000 to 4000 energy channels, or even as much as 8000 energy channels, and the acquired data are then typically binned to 100 to 200 energy channels or energy levels in post processing in order to reduce noise. The second detector may in this manner have multi-energy resolution, such as an energy resolution of typically 100 to 200 levels, even though fever levels may also be applicable, such as energy resolution in 16 levels, or 56 levels or 128 levels.

The X-ray source and second detectors may be mounted in a fixed structure so that their mutual positioning is fixed, but the fixed structure being movable, such as sideways or in the direction of height.

It is preferred that the groups of carry-on items requiring further scanning are in average over a week of operation at the most 10 percent of all groups of carry-on items scanned during the week. The further scanning is time-consuming and the efficiency of the security scanning is high when at least 90 percent of all groups of carry-on items scanned are either determined to include a threat or to not include a threat solely by the scanning in the first stage module and the subsequent reconstruction and analyzing. The scanning in the second stage module will for a large proportion of the groups requiring further scanning determine with high accuracy whether the individual group of carry-on items actually include a threat or actually do not include a threat, and consequently only very few groups of carry-on items require a subsequent manual inspection by security personnel. A lower level of determination without scanning in the second stage module is also possible, but less preferable, such as the groups of carry-on items determined to require further scanning are in average over a week of operation at the most 20 percent of all groups of carry-on items scanned during the week.

In an embodiment there are two or more second detectors arranged along a circle concentric with the direct beam path.

It is an advantage of the security scanning method according to the present invention that it can determine with a high degree of certainty whether a group of carry-on items contains a threat or not, and that this determination can be done without manual inspection of the group of carry-on items.

The carrier of the individual group of carry-on items may for example be a cart used by a person to transport the person's personal group of carry-on items. This makes the security scanning of the group of carry-on items very simple, because the person does not need to unload the carry-on items onto a special carrier used only for security scanning purposes, but may simply pass the cart used to transport the carry-on items to the security scanning location through the security scanning, possibly after having placed additional carry-on items onto the cart, such as key rings, a phone or a piece of garment, in order to simplify personal scanning in a separate procedure for such scanning. When the cart has been scanned and accepted as holding no threat, it is simply released to the person, and the person can immediately continue in the travel path desired without having to remove the carry-on items from the carrier used during the security scanning. However, it is also possible to use a carrier that is dedicated for security scanning, and then the carry-on items need to be loaded onto the carrier before scanning and to be removed from the carrier after completed scanning.

The ability to scan and determine liquids and gels makes it possible for a group of carry-on items on the carrier to include content items holding liquid amounts in the range of 0.13 I to 3 I. It is currently a requirement at many security scanning locations, such as at airports that content items have to be removed from the carry-on item if the content item fulfils certain criteria, such as a liquid amount on excess of 0.1 I. Many bottles hold more than 100 ml of liquid, and it is thus cumbersome to travelling persons that current security scanning systems cannot determine that for instance a bottle of water is actually a bottle of water an pose no security threat. The method of security scanning according to the present invention is capable of making the determination whether a liquid is a threat or not. This determination is performed on small volumes, and these volumes are much smaller than a volume holding 100 ml. The method of security scanning according to the present invention is consequently capable of determining whether a liquid is a threat or not irrespective of whether the item holding the liquid is larger than 100 ml or smaller than 100 ml. When the method of security scanning is capable of determining whether a content item holding liquid amounts in the range of 0.13 I to 3 I is a threat or not, then the method can determine whether a content item holding liquid is a threat, also when the liquid amount in the content item is lower than 130 ml or higher than 3000 ml. To the persons carrying the groups of carry-on items, it will be a relief not to have to take out singular content items from a carry-on item, just because it contains liquid in an amount over 100 ml.

In the following, illustrative examples and embodiments of the present invention are described in further detail with reference to the schematic drawings, on which
Fig. 1 illustrates a security scanning system according to the present invention,
Fig. 2 illustrates a first stage module in the system of Fig. 1,
Fig. 3 illustrates an embodiment of a line-shaped first detector,
Fig. 4 illustrates an embodiment of a cart with a group of carry-on items,
Fig. 5 illustrates a second stage module in the system of Fig. 1,
Figs. 6, 7 and 8 illustrate a first embodiment, a second embodiment and a third embodiment, respectively, of a focusing device in the second stage module of Fig. 1,
Fig. 9 illustrates in enlargement a wall-section of a further embodiment of the focusing device,
Fig. 10 illustrates a partial view of a further embodiment of the second stage module, and
Fig. 11 illustrates a collimator and second detectors of the embodiment of Fig. 10.

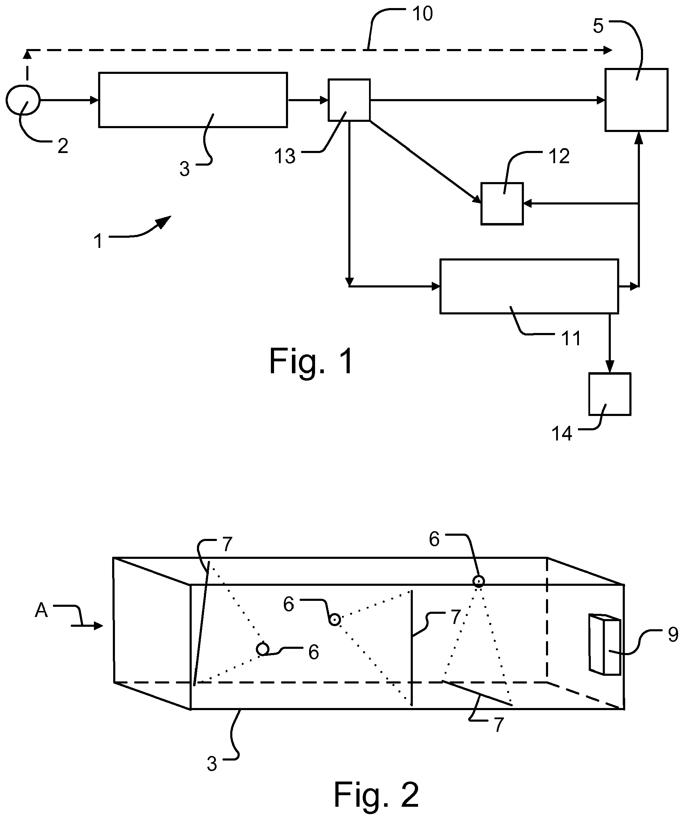

An embodiment of a security scanning system for scanning of carry-on items is generally denoted 1 in Fig. 1. The security scanning system has an inlet station 2 for carry-on items located at the end of a first stage module 3. A person arriving at the security scanning system in order to be security scanned delivers the carry-on items at the inlet station. In case the security scanning system is located at a facility where the person is carrying the carry-on items, the security scanning system may have carriers for receiving the carry-on items at inlet station 2. In this case, the person places the carry-on items on the carrier as a group 4 of carry-on items. In case the security scanning system is located at a facility, like an airport, where carts are provided for transporting carry-on items within the facility, the cart with the group of carry-on items is simply delivered at the inlet station 2. The person then walks to a release station 5 along a path 10 as indicated by the broken line, and on the way the person may pass a scanning station for scanning persons.

In the following description of embodiments, the same reference numerals are used for details of the same type. The described embodiments can be combined, and different details from the various embodiments can be combined into further embodiments within the scope of the patent claims.

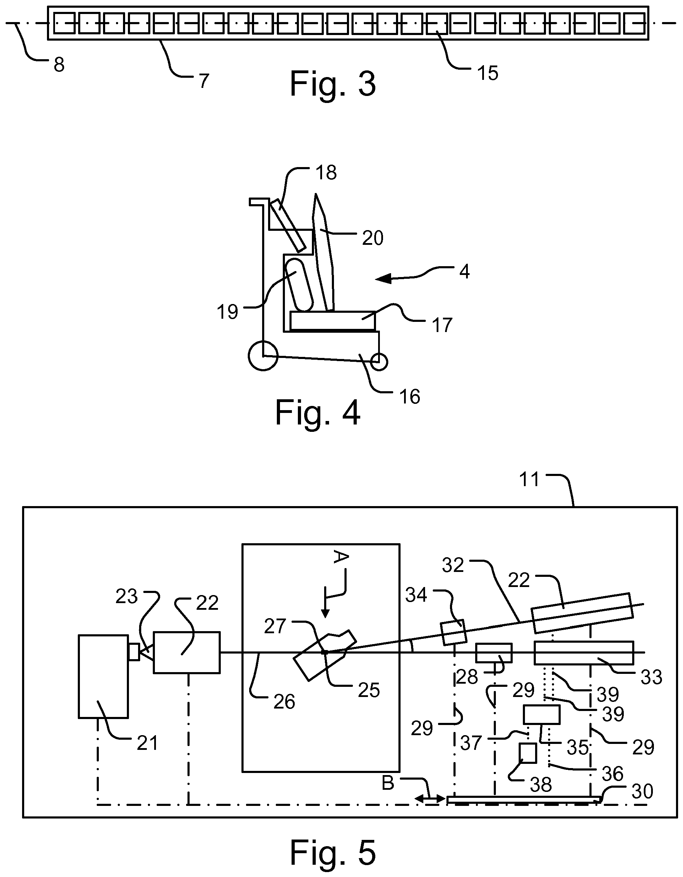

The first stage module 3 has at least one X-ray source 6 and at least three first detectors 7 for conducting transmission contrast radiography. The individual first detector is line-shaped along a longitudinal axis 8 (cf. Fig. 3). The X-ray source 6 is located to emit an X-ray beam from one side of a scanning volume in the first stage module towards an associated line-shaped first detector located at the opposite side of the scanning volume. When a group of carry-on items on the one hand and X-ray source and associated first detector on the other hand are moved in relation to one another, and the X-ray beam illuminates the group of carry-on items and passes on to the first detector, then the image data detected by the first detector are sampled with a frequency that permits acquisition of a complete two-dimensional image of the group of carry-on items. The sampling frequency is preferably so that from one sampling to the next the group of carry-on items has shifted a distance corresponding to the width of the first detector in the direction of movement. The sampling frequency may also be higher, and then the image data handling may make adjustment to take into account that the same position within the group of carry-on items has been sampled more than once by the same first detector.

The at least three first detectors 7 have their longitudinal axes 8 oriented in mutually different orientations in space. The image data detected by one of the first detectors will consequently represent a slice through the group of carry-on items in a direction that is different from the corresponding directions of the at least two other first detectors. The at least three first detectors will thus provide at least three image data of every position within the group of carry-on items. The image data represent the attenuation of the X-rays during passing through the group of carry-on items. In most cases the individual items in the group overlap in the direction of the x-ray beam, and the resulting attenuation is caused by attenuation in the various overlapping materials. However, as the first detectors are oriented in mutually different orientations, the image data analysis can determine the type of material in a particular volume within the group of carry-on items.

The X-ray source 6 emits the X-ray beam from a beam opening. The beam opening is in one embodiment shaped to emit the X-ray beam as a fan shaped beam with such a large opening angle that the fan beam illuminates completely the group of carry-on items in the direction given by the orientation of the associated line-shaped first detector and the location of the source and this first detector. The X-ray source may also be arranged as an array of beam openings so that the resulting beam is sheet-like. In an embodiment the first stage module has a single X-ray source that supplies a plurality of beam opening. In another embodiment the first stage module has several X-ray sources, such as one X-ray source for each first detector.

In Fig. 2 three first detectors 6 are arranged. At the right hand side one first detector is located below the scanning volume and oriented with the longitudinal axis in horizontal direction and about perpendicular to a direction of travel A, and with the associated beam opening of the X-ray source 6 located above the scanning volume. A second of the three first detectors is located to one side of the scanning volume and extends in the vertical direction, and the beam opening of the associated X-ray source 6 located to the opposite side of the scanning volume. A third of the three first detectors is located at the side of the scanning volume and extends in an oblique direction, and the beam opening of the associated X-ray source 6 is located at the opposite side of the scanning volume. In another embodiment there are more than three first detectors and associated beam openings, such as 9 first detectors.

The first detectors are operationally connected with at least one processing unit in a processing device 9 that reconstruct a 3D representation of the scanned group of carry-on items based on the sampled 2D projections. At each sampling a 2D projection containing image data is obtained from each of the first detectors. The geometry of the first detectors and X-ray sources are known and stored in the processing device together with algorithms used to reconstruct the 3D representation.

The 3D representation is divided into voxels. A voxel is a volume of pre-defined length, height and width, and image data from each detector are associated with the voxels. For a particular voxel the association can be illustrated by imagining a straight line from the X-ray source through the voxel to a point on the associated first detector, and the image data sampled at this point on the first detector is associated with the voxel. There will be as many such lines as there are first detectors, so the individual voxel is associated with a set of image data holding information on the X-ray attenuation in the directions of the lines.

The first detectors 7 are energy resolvable detectors, and may detect at least two values at the same time, where the individual value is associated with a energy level or energy range of the detected photon. This may assist in determining the materials in the carry-on items. The individual first detector is line-shaped and may include an array of subunits forming together the detector. In Fig. 3 such an array of subunits 15 is illustrated. The subunits 15 are illustrated with a little free distance between the subunits for ease of illustration, but in reality the subunits form a continuous detector surface. On one embodiment the energy resolvability of the first detector is better than 3 percent of the energy level of the detected X-rays. In another embodiment the first detector is able to differentiate the photons in 128 different energy levels.

The 2D image data captured by the first detector are transmitted to the processing device 9 and stored and utilized in the reconstruction of the 3D representation and also used in characterization of the materials of the voxels in the model. The 3D representation allows to analyze the carry-on items and to identify the individual items that overlap one another in the projections captured as 2D image data. An accurate 3D representation can be based on in the range of from 3 to 30 projections, preferably from 3 to 20 projections of 2D image data.

The voxels in the 3D representation are categorized as to the material. In this categorization two or three categories are used, namely known restricted materials, and known safe materials, and optionally the category unknown sate materials may also be used. The individual categorization is associated with an estimated value of accuracy. The value of accuracy may be 100 if the determination is absolute and without uncertainty, and the value of accuracy may be 0 if the determination is completely uncertain.

A pre-defined first threshold value may be used. If the accuracy value associated with a voxel categorized as a known restricted materials or known safe materials is below the first threshold value then it is decided that further analysis of the volume containing the voxel is required in order to resolve the uncertainty. On the other hand, if the estimated value of accuracy is above the first threshold value, then the category is accepted.

A pre-defined second threshold value may be used in connection with the unknown materials. The second threshold value is preferably higher than the first threshold value. The pre-defined first threshold value and/or the pre-defined second threshold value may be adjustable, so that if a temporary security problem arises, which requires a higher level of security, then the threshold values are adjusted accordingly. It may also be needed to adjust the values based on gathering of data during operation.

In case the analysis of the voxels results in that there are only known safe materials with the required accuracy in the determination, then the carrier with the group of carry-on items is shifted to release station 5 where the person or passenger can recollect the items and move on. However, if there is at least one voxel that requires further scanning then the carrier with the group of carry-on items is shifted to a second stage module 11 by a shifting device 13. In case the analysis results in that there is a known restricted material with the required accuracy in the determination, then the carrier with the group of carry-on items is directed to a keeping station 12 by the shifting device 13. In the keeping station security personnel may conduct an additional manual search and/or take appropriate action on the findings.

The second stage module has at least one X-ray source 21 and at least one second detector 22. Because only a fraction of all the groups of carry-on items requires scanning in the second stage module 11, the scanning therein has more time at hand and can be more specific. The scanning in the second stage module includes a diffraction scanning, and it can be an elastic scattering based scanning. The elastic scattering based scanning is a diffraction scanning where the direction of propagation of the photon is modified by interaction with the material in the local area, but the kinetic energy of the photon is conserved. The diffraction scanning may also be an inelastic scattering where the incident photon changes kinetic energy at scattering. The scanning in the second stage module is only performed in a small volume coinciding with a local area 23 requiring further scanning, or in several such small volumes in case the group of carry-on items has more than one local area requiring further scanning.

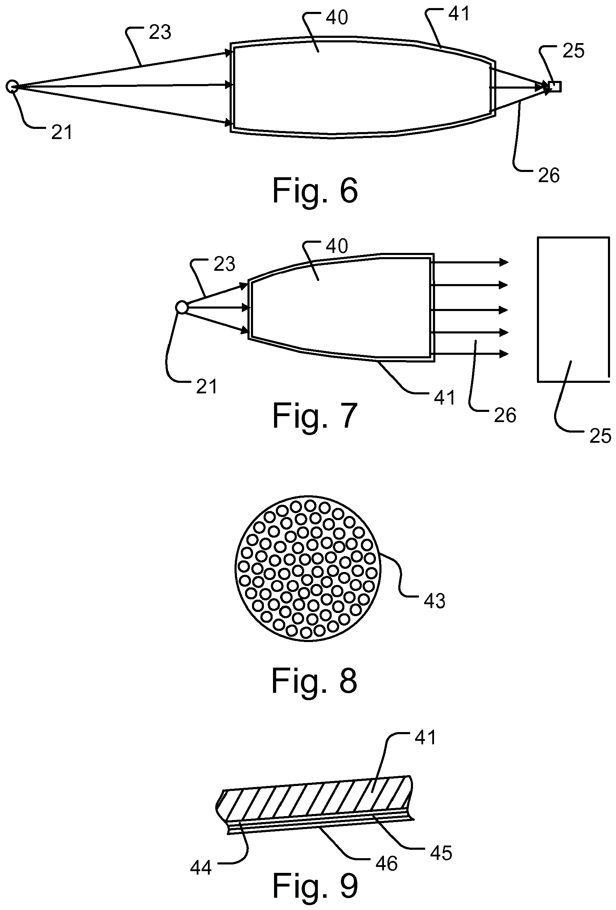

The X-ray source 21 emits a polychromatic X-ray beam in a divergent shape 23, viewed as a fan-shape in Fig. 5, and a focusing device 24 focuses photons in the beam towards a measuring position 25, see Figs. 6, 7 and 12. The focusing device emits a focused X-ray beam 26 to the measuring position 25.

The group of carry-on items enters the second stage module 11 and travels in direction of arrow A. The scanning in the second stage module can be initiated in several different manners, that all perform a mutual positioning of the group of carry-on items and X-ray source 21 and the focusing device 24 so that measuring position 25 is in line with the local area 27 requiring further scanning.

In one embodiment the group of carry-on items is movable, and the transporting mechanism in the second stage module moves the group of carry-on items in the direction of travel and in the direction of height and possibly also in direction towards and away from the X-ray source so that the measuring position 25 is in line with the local area 27 requiring further scanning.

In another embodiment the group of carry-on items is moved by the transporting mechanism in the second stage module in the direction of travel A, and is stopped in the position where the focused X-ray beam 26 passes through a vertical plane through the local area 27 requiring further scanning. The X-ray source 21 and the focusing device 24 are moved in the direction of height to the position where the focussed beam and thus the measuring position 25 is in line with and thus passes through the local area 27 requiring further scanning.

In a further development, the second detector and a first collimator 28 are fixed by stiffeners 29 to a platform 30, and the platform is movable in direction towards and away from the X-ray source as indicated by arrows B which is transverse to the transport direction A. A structure 31 carries X-ray source 21 and focusing device 24 and platform 30 so that they are movable in unison in the direction of height.

In another embodiment the group of carry-on items is moved by the transporting mechanism in the direction of travel A, and the X-ray source 21, the focusing device 24 and the second detector 22 are moved in the direction of height to the position where the focussed beam and thus the measuring position 25 is in line with and passes through the local area 27 requiring further scanning, and furthermore they are moved to follow the movement of the group of carry-on items in the direction of travel A during the scanning so that the focussed beam passes through the local area 27 during the scanning. This embodiment is in particular suited for scanning when the group of carry-on items only has a single local area requiring further scanning.

In another embodiment the group of carry-on items is moved by the transporting mechanism in the second stage module in the direction of travel A, and is stopped to a stationary position within the second stage module. The X-ray source 21 and the focusing device 24 and possibly the second detector, if required, are moved to the position where the focussed beam and thus the measuring position 25 is in line with and passes through the local area 27 requiring further scanning. This embodiment is in particular suited for scanning when the group of carry-on items has several local areas requiring further scanning, because the position is stationary as long as it takes to scan the local areas.

The second detector can have a large detector area and be mounted at a fixed position, or the second detector can be movably mounted, for example as illustrated in Fig. 5. When the detector is movable in the direction of height, and possibly also in direction of arrows B, the size of the detector area can be smaller, as the detector is positioned along a diffraction path 32, which is line-shaped and originates at measuring position 25 and forms an angle θ with the direct beam path of the focused X-ray beam 26. The angle θ can e.g. be 15°, however a small angle in the range of 2° to 7° is preferred, suitably in the range of 3° to 5° when the embodiment also comprises an third detector 33 located in the direct beam path of the focused X-ray beam 26. The third detector is optional, but can be applied to all embodiments. The third detector provides the advantage that the attenuation of the direct beam is detected, which attenuation is caused by passing through the various items in the group of carry-on items, and when the angle θ is small, then it is a suitable assumption that the diffracted signal has passed through similar materials, and the attenuations detected by the third detector can thus be applied to correct the detected diffraction signal for attenuation and obtain a more precise recording of the actual diffraction signal. In case the second detector and the third detector detect an energy spectrum, the energy spectrum acquired on the third detector from the direct beam can be used to correct the diffraction spectra detected by the second detector for energy dependent attenuation. These embodiments can be applied to all other embodiments of the present invention.

In an embodiment the third detector is associated with a second collimator 34. The second collimator is a pinhole collimator made of a material and dimensions providing strong attenuation of X-rays and having a central bore of typically a smaller diameter than the diameter of the focused X-ray beam 26 at the exit opening of the focusing device 24. In the case of a 1 mm beam diameter at the exit opening, the central bore may typically have a pinhole of a diameter of about 0.1 mm in diameter. By using a smaller pinhole, saturation of the third detector is avoided. The effect of the second collimator is to shield the third detector from X-rays other than those in the direct beam. This embodiment can be applied to all embodiments of the present invention. The second collimator and the third detector are connected by stiffeners 29 to platform 30 or to structure 31 or mounted in another manner.

A second processing device 35 controls the positioning of one or more of X-ray source 21, the transporting mechanism in the second stage module, focusing device 24, first collimator 28, platform 30, third detector 33 and second collimator. The second processing device received data from processing device 9 associated with the first stage module. The data identify the local area 27 or the local areas 27 requiring further scanning, at least with respect to the position of the local area(s) within the group of carry-on items, and possibly also with further information detected in the first stage module, such as whether material in the local area 27 is of a solid material or of a fluid material, like a liquid, a gel or a gas, e.g. an aerosol. For a given volume at a local area requiring further scanning and a given scanning period, less diffraction signals can be expected when the material is of a fluid material than when it is of a solid material. The further information thus allows adaptation of the scanning in the second module to one or the other type, and to save time and only spend the period actually required for the scanning. One adaptation is to increase the width of the focused X-ray beam 26 when the volume contains a liquid. The second stage module can also comprise duplicate or triple sets of equipment like the single set illustrated in Fig. 5, where one set provides a focused X-ray beam of narrow width for use with solids and another set provides a focused X-ray beam of larger width for use with liquids. The second processing device then controls the relevant set to be positioned to direct the relevant X-ray beam to the local area to be further scanned. If more than one local area is to be scanned, then the second processing device controls several sets to be positioned and scan in parallel.

The second processing device 35 is connected with the processing device 9 via a first signal line 36, and via one or more second signal lines 37 to one or more actuators 38 for adjusting the positions of the above-mentioned parts in the individual set of equipment in the second stage module. Via one or more third signal lines 39 the second processing device 35 receives data from the second detector and possibly also from the third detector. Processing device 9 and second processing device 35 can be integrated into a single device or can be divided into more processing devices, as is most convenient in the embodiment at hand.

The first collimator 28 is made of a material and dimensions providing strong attenuation of X-rays and has a passage allowing free passing of diffraction path 32. The passage can be part circular-shaped where the radius of the circle corresponds to the distance from the passage to the direct path of the focused X-ray beam 26 or it can be a pinhole or a path of square cross-section or of another shape. The passage is preferably of rectangular shape in order to achieve a short intersection between the central beam and the diffracted beam, and for small diffraction angles, a rectangular shape of e.g. 1 mm x 3 mm can be suitable. The effect of the second collimator is to shield the second detector from X-rays other than those occurring in the selected diffraction path. This shielding improves the signal-to-noise ratio and thus allows more precise detection in shorter time. As an example, the shielding may allow detection of e.g. 1000 diffracted photons and 3 photons caused by other events than diffraction along the selected diffraction path 32. Without the shielding it is likely that one photon out of three is caused by other events. This embodiment can be applied to all other embodiments of the present invention.

The focusing device 24 can in one embodiment comprise a set of mirrors that capture the divergent polychromatic beam from X-ray source 21 and focus the beam into X-ray beam 26. However, mirrors do have the disadvantage of taking up much space, and the outer dimensions of the second stage module are quite large when mirrors are employed. In another embodiment the focusing device 24 comprises a tube-shaped member 40 having a wall 41 of tubular shape and a central passage 42. The shape of the wall is of elliptical shape in cross-section with the one focus point located at X-ray source 21 and another focus point located at the measuring position 25. Photons in the divergent shape 23 of the beam at the exit opening of X-ray source 21 are thus received in the tube-shaped member 40 and reflected on the inside of wall 41 and exits the tube-shaped member as a focused X-ray beam directed towards measuring position 25, as illustrated in Fig. 6. When this embodiment of the focussing device 24 is applied it is preferred that the X-ray source and the focusing device are movable in direction of arrows B or that the group of carry-on items is movable in this direction in relation to the focusing device so that the measuring position 25 is located within the local area 26 during scanning.

In another embodiment, illustrated in Fig. 7, the tube-shaped member 40 has a wall 41 of parabolic shape in cross-section with a focus point located at X-ray source 21. Photons in the divergent shape 23 of the beam at the exit opening of X-ray source 21 are thus received in the tube-shaped member 40 and reflected on the inside of wall 41 and focused into a parallel focused X-ray beam 26 directed towards measuring position 25. In this embodiment of the focusing device 24 the flux density of photons are more or less constant in increasing distances from the focusing device 24, and X-ray source and the focusing device need not be movable in direction of arrows B.

In an embodiment a plurality of tube-shaped members 40 are included in the focusing device 24. In this manner large portions of the divergent X-ray beam from X-ray source 21 are concentrated in the focusing device into the focused X-ray beam 26, and this increases the photon flux density in beam 26 and decreases the duration required for scanning a local area 26. In a further embodiment the focusing device comprises a polycapillary element 43, illustrated in Fig. 8 in an end view. The tube-shaped members are formed as channels in the solid material of element 43. The polycapillary element 43 allows to locate many channels in a very compact structure, and consequently a high degree of capture of the photons in the divergent X-ray beam from the X-ray source can be obtained.

The inside surface of the tube-shaped member or the capillary in the polycapillary element is in an embodiment surface coated. The surface coating can include a material having a density of at least 10 g/cm³. The surface coating is provided to increase the proportion of photons that are reflected when meeting the surface. The critical angle for reflection of photons practically without any loss in flux depends on the energy of the X-rays and the material density of the encountered surface, and the increase in density of the material at the surface thus results in a higher flux density in the focused X-ray beam 26. In an embodiment the surface coating includes a material having a density of at least 16 g/cm³.

In a further embodiment the at least one tube-shaped member is surface coated with at least one material, or a mixture of materials, selected from the group comprising gold, platinum, iridium, tungsten, silver, palladium, rhodium, ruthenium and molybdenum.

In a further development of these embodiments the at least one tube-shaped member is surface coated with a multilayer coating comprising at least one layer of a material having a density of at the most 4 g/cm³. Alternating coating layers of high density and low density can increase the resulting reflectivity in certain bandwidths of X-rays, and as the X-ray source 21 emits a polychromatic beam providing a certain bandwidths of X-rays the photon flux density in the focused X-ray beam 26 can be increased by the multilayer coating. In Fig. 9 an example of a three layered coating is illustrated where an inner coating layer 44 is of a material having a density of at least 16 g/cm³, a middle coating layer is of a material having a density of at most 4 g/cm³ and an outer coating layer 46 is of a material having a density of at least 10 g/cm³. The low density materials can e.g. be selected from the group comprising silicon, boron carbide and carbon.

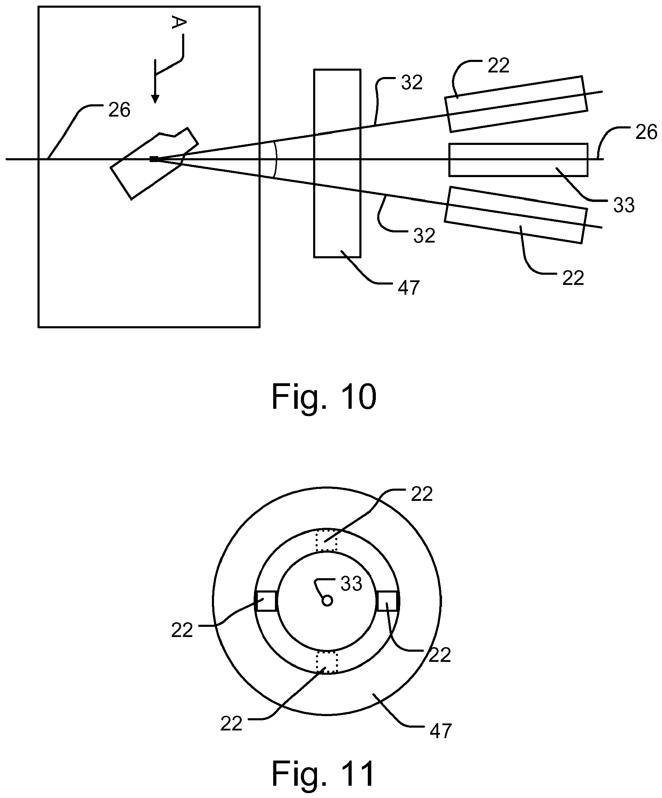

An additional manner of shortening the duration of the scanning in the second stage module is to increase the area of the second detector so that more diffracted photons are detected. In the embodiment illustrated in Fig. 10 two second detectors 22 are utilized in a horizontally symmetric arrangement about the third detector 33. The first and second collimators have been combined into a common collimator 47 provided with both a central pinhole and a passage for each of the diffraction paths to the second detectors. Fig. 11 illustrates the arrangement seen in direction of the direct beam path. The passage for the diffraction paths has annular or part-annular shape. There can be more than two second detectors, such as two additional second detectors marked in broken lines or even more second detectors.

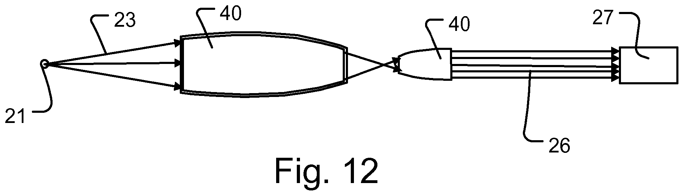

Fig. 12 illustrates a further embodiment of the focusing device, in which a tube-shaped member having a wall of elliptical shape is associated with a tube-shaped member having a wall of parabolic shape, where the latter member is located at a slightly larger distance from the former member that the second focusing point so that the resulting parallel focused X-ray beam 26 has a very small width and a very high photon flux density.

The X-ray source in the second stage module has in an embodiment a nominal tube voltage of at least 110 kV. As an example the X-ray source can be of the mark Varian and the type NDI/160-22 having a nominal tube voltage of 160 kV. The X-ray source in the second stage module preferably has a nonrotating anode and is preferably air-cooled.

The focussed X-ray beam 26 at the measuring position can have a largest cross-sectional dimension e.g. in the range of from 4 µm to 500 µm. Larger cross-sectional dimensions are also possible, such as in the range from 0.5 mm to 5 mm. The larger dimensions can be suitable for acquisition in connection with liquid materials.

The second detectors are operationally connected with a processing unit in the second processing device 35, and based on the information obtained in the second stage scanning the processing device determines whether the material in the voxel is safe or restricted. If it is safe, then the carrier with the group of carry-on items is shifted to release station 5. If it is restricted, then the carrier with the group of carry-on items is shifted to keeping station 12. In the exceptional case that the category of the voxel still remains undecided, then the carrier with the carry-on items is shifted to a manual inspection station 14.

Processing device 35 may include a library of characteristic materials, like what has been described in the above in relation to evaluation of the detection in the first stage module. A library of e.g. 1000 different types of materials cover almost any content item in an actual carry-on item, and a library of 100 different materials, or 300 different materials, will cover a large percentage of all materials in carry-on items in e.g. an airport. Each entry of a material in the library can be associated with data for X-ray attenuation in the material, and this attenuation includes at least two values representing attenuation at different energy levels for the X-rays. The processing device may also include a library of characteristic restricted materials, such as explosives, poisons, highly toxic materials, highly flammable materials etc. These materials are known restricted materials. A library of e.g. 1000 or 500 different types of restricted materials provide high reliability of detection of any restricted material. A library of 100 or 300 different materials will assist in covering a large percentage of all materials in carry-on items in e.g. an airport. Each entry of a material in the library can be associated with data for X-ray attenuation in the material, and this attenuation includes at least two values representing attenuation at different energy levels of the X-rays.

The second detector, and preferably also the third detector, has energy resolution and is thus capable of detecting an energy spectrum of photons. In one embodiment the energy resolvability of the first detector is better than 3 percent of the energy level of the detected X-rays, such as better than 0.8 percent of the energy level. In a further or alternative embodiment the energy resolvability of the detector is able to differentiate the photons in a plurality of energy levels, such as the acqusition by typically 1000 to 4000 channels binned to 128 channels (128 different energy levels) to reduce noise. Examples of detector materials suitable for energy dispersive detection of X-rays are cadmium zinc telluride (CdZnTe) or cadmium telluride (CdTe) materials or high purity germanium (HPGe) materials. One example of a detector is the model XR-100T-CdTe from Amptec Inc., Bedford, MA, U.S.A.

The at least dual energy resolution of the second detector provides information as to the nature of the materials in the carry-on items and allows improved determination of whether the material is categorized into restricted materials or safe materials.

Details from the above-mentioned embodiments and examples may be combined into other embodiments and examples within the scope of the patent claims.

## Claims

1. A method of security scanning of carry-on items, comprising at least the following steps
a) receiving carry-on items,
b) scanning the carry-on items in a first stage module using at least one X-ray source and first detectors to conduct transmission contrast radiography generating projections of two-dimensional image data of the carry-on items,
c) reconstructing a three-dimensional representation of the carry-on items,
d) analysing the three-dimensional representation to determine either that the scanning in step b) provides a final result or that at least one local volume in the carry-on items is requiring further scanning, wherein
the carry-on items in step a) are received as a group of carry-on items on a carrier and are scanned simultaneously as a group in step b), and wherein
e) a group of carry-on items determined in step d) to have at least one local area requiring further scanning is further scanned in a second stage module, in which the group of carry-on items and a X-ray source and a focusing device are mutually positioned so that a measuring position is in line with the local area requiring further scanning, and the X-ray source emits photons in a polychromatic X-ray beam, which photons are focussed towards the measuring position by the focusing device, and at least one second detector detects diffracted X-rays from the local area,
**characterized in that** the focusing device adjusts the focusing so that the measuring position has a larger cross-section when the local area contains liquids or gels than when the local area contains a solid substance.

2. A method of security scanning of carry-on items according to claim 1, wherein a third detector detects X-rays in the direct beam from the local area.

3. A method of security scanning of carry-on items according to claims 1 or 2, wherein the photons are guided by at least one tube-shaped member in the focusing device.

4. A method of security scanning of carry-on items according to one or more of claims 1 to 3, wherein the X-ray source and the focusing device at one side of the measuring position and the at least one second detector at the opposite side of the measuring position are interconnected and movable as a unit during positioning in relation to a single local area requiring further scanning.

5. A carry-on items security scanning system (1), comprising an inlet station (2) for carry-on items (4), a first stage module (3) having at least one X-ray source (6) and first detectors (7) for conducting transmission contrast radiography generating projections of two-dimensional image data of the carry-on items, at least one processing unit (9) operationally connected to said first detectors, which at least one processing unit is configured to reconstruct a three-dimensional representation of the carry-on items and to analyze the three-dimensional representation to determine whether there is at least one local area (27) requiring further scanning, and a second stage module (11) for scanning the local area requiring further scanning and comprising positioning means and at least one X-ray source (21) and at least one second detector (22) for detecting diffracted X-rays, wherein the inlet station for the carry-on items is configured to receive a group of carry-on items on a carrier, and the first stage module is configured to simultaneously scan the group of carry-on items on the carrier, and wherein the second stage module further comprises a focusing device (24) located at the X-ray source in the path of a polychromatic X-ray beam for focusing photons towards a measuring position (25), and wherein the positioning means are adapted to mutually position the measuring position and the local area so that the measuring position is in line with the local area requiring further scanning,
**characterized in that** the focussing device is configured to adjust the focusing so that the measuring position has a larger cross-section when the local area contains liquids or gels than when the local area contains a solid substance.

6. A carry-on items security scanning system according to claim 5, wherein the focusing device comprises at least one tube-shaped member (40) through which the photons are guided.

7. A carry-on items security scanning system according to claim 6, wherein the at least one tube-shaped member is surface coated.

8. A carry-on items security scanning system according to claim 7, wherein the at least one tube-shaped member is surface coated with a material having a density of at least 10 g/cm³, preferably a density of at least 16 g/cm³.

9. A carry-on items security scanning system according to claim 7 or 8, wherein the at least one tube-shaped member is surface coated with at least one material, or a mixture of materials, selected from the group comprising gold, platinum, iridium, tungsten, silver, palladium, rhodium, ruthenium and molybdenum.

10. A carry-on items security scanning system according to one or more of claims 7 to 9, wherein the at least one tube-shaped member is surface coated with a multilayer coating comprising at least one layer of a material having a density of at the most 4 g/cm³, and preferably at the most 2.5 g/cm³, such as at least one material, or a mixture of materials, selected from the group comprising silicon, boron carbide and carbon.

11. A carry-on items security scanning system according to one or more of claims 5 to 10, wherein the focusing device comprises a polycapillary member through which the photons are guided.

12. A carry-on items security scanning system according to one or more of claims 5 to 11, wherein the X-ray source in the second stage module has a nominal tube voltage of at least 110 kV, preferably at least 140 kV.

13. A carry-on items security scanning system according to one or more of claims 5 to 12, wherein the X-ray source in the second stage module is air-cooled and is without water-cooling.

14. A carry-on items security scanning system according to one or more of claims 5 to 13, wherein the focussed X-ray beam at the measuring position has a largest cross-sectional dimension in the range of from 4 µm to 500 µm.

15. A carry-on items security scanning system according to one or more of claims 5 to 14, wherein the at least one second detector has at least dual energy resolution, and preferably multi-energy resolution, such as acquisition in 1000 to 4000 energy channels with subsequent binning to in the range from 100 to 200 energy levels.

## Patentansprüche

1. Verfahren zum Sicherheitsscannen von Handgepäckstücken, umfassend mindestens die folgenden Schritte
a) Empfangen von Handgepäckstücken,
b) Scannen der Handgepäckstücke in einem erststufigen Modul der unter Verwendung mindestens einer Röntgenquelle und erster Detektoren, um eine Transmissionskontrastradiographie durchzuführen, die Projektionen von zweidimensionalen Bilddaten der Handgepäckstücke erzeugt;
c) Rekonstruieren einer dreidimensionalen Darstellung der Handgepäckstücke,
d) Analysieren der dreidimensionalen Darstellung zum Bestimmen entweder, dass das Scannen in Schritt b) ein finales Ergebnis liefert, oder dass mindestens ein lokales Volumen in den Handgepäckstücken ein weiteres Scannen erfordert, wobei
die Handgepäckstücke in Schritt a) als Gruppe von Handgepäckstücken auf einem Träger empfangen werden und in Schritt b) gleichzeitig als Gruppe gescannt werden, und wobei
e) eine Gruppe von Handgepäckstücken, für die in Schritt d) bestimmt wurde, dass sie mindestens einen lokalen Bereich haben, der ein weiteres Scannen erfordert, in einem zweitstufigen Modul weiter gescannt wird, in dem die Gruppe von Handgepäckstücken und eine Röntgenquelle und eine Fokussiervorrichtung gegenseitig so positioniert werden, dass eine Messposition mit dem lokalen Bereich, der ein weiteres Scannen erfordert, übereinstimmt, und die Röntgenquelle Photonen in einem polychromatischen Röntgenstrahl emittiert, wobei Photonen von der Fokussiervorrichtung auf die Messposition fokussiert werden und mindestens ein zweiter Detektor gebeugte Röntgenstrahlen aus dem lokalen Bereich detektiert, **dadurch gekennzeichnet, dass** die Fokussiervorrichtung die Fokussierung so einstellt, dass die Messposition einen größeren Querschnitt hat, wenn der lokale Bereich Flüssigkeiten oder Gele aufweist, als wenn der lokale Bereich eine feste Substanz aufweist.

2. Verfahren zum Sicherheitsscannen von Handgepäckstücken nach Anspruch 1, wobei ein dritter Detektor Röntgenstrahlen in dem direkten Strahl aus dem lokalen Bereich erfasst.

3. Verfahren zum Sicherheitsscannen von Handgepäckstücken nach Anspruch 1 oder 2, wobei die Photonen von mindestens einem rohrförmigen Element in der Fokussiervorrichtung geführt werden.

4. Verfahren zum Sicherheitsscannen von Handgepäckstücken nach einem oder mehreren der Ansprüche 1 bis 3, wobei die Röntgenquelle und die Fokussiervorrichtung auf einer Seite der Messposition und der mindestens eine zweite Detektor auf der gegenüberliegenden Seite der Messposition während einer Positionierung in Bezug auf einen einzelnen lokalen Bereich, der ein weiteres Scannen erfordert, miteinander verbunden und als Einheit bewegbar sind.

5. Sicherheitsscansystem (1) für Handgepäckstücke, umfassend eine Einlassstation (2) für Handgepäckstücke (4), ein erststufiges Modul (3) mit mindestens einer Röntgenquelle (6) und ersten Detektoren (7) zum Durchführen einer Transmissionskontrastradiographie, die Projektionen von zweidimensionalen Bilddaten der Handgepäckstücke erzeugt, wobei mindestens eine Verarbeitungseinheit (9) operativ mit den ersten Detektoren verbunden ist, wobei mindestens eine Verarbeitungseinheit dazu ausgelegt ist, eine dreidimensionale Darstellung der Handgepäckstücke zu rekonstruieren und die dreidimensionale Darstellung zu analysieren, um zu bestimmen, ob es mindestens einen lokalen Bereich (27) gibt, der ein weiteres Scannen erfordert, und ein zweitstufiges Modul (11) zum Scannen des lokalen Bereichs, der ein weiteres Scannen erfordert, und das Positionierungsmittel und mindestens eine Röntgenquelle (21) und mindestens einen zweiten Detektor (22) zum Detektieren gebeugter Röntgenstrahlen umfasst, wobei die Einlassstation für die Handgepäckstücke dazu ausgelegt ist, eine Gruppe von Handgepäckstücken auf einem Träger zu empfangen, und wobei das erststufige Modul dazu ausgelegt ist, die Gruppe von Handgepäckstücken auf dem Träger gleichzeitig zu scannen, und wobei das zweitstufige Modul ferner eine Fokussiervorrichtung (24) umfasst, die an der Röntgenquelle auf dem Pfad eines polychromatischen Röntgenstrahls zum Fokussieren von Photonen in Richtung einer Messposition (25) angeordnet ist, wobei die Positionierungsmittel dazu angepasst sind, die Messposition und den lokalen Bereich gegenseitig so zu positionieren, dass die Messposition mit dem lokalen Bereich, der ein weiteres Scannen erfordert, übereinstimmt;
**dadurch gekennzeichnet, dass** die Fokussiervorrichtung dazu ausgelegt ist, die Fokussierung so einzustellen, dass die Messposition einen größeren Querschnitt hat, wenn der lokale Bereich Flüssigkeiten oder Gele aufweist, als wenn der lokale Bereich eine feste Substanz aufweist.

6. Sicherheitsscansystem für Handgepäckstücke nach Anspruch 5, wobei die Fokussiervorrichtung mindestens ein rohrförmiges Element (40) umfasst, durch das die Photonen geführt werden.

7. Sicherheitsscansystem für Handgepäckstücke nach Anspruch 6, wobei das mindestens eine rohrförmige Element oberflächenbeschichtet ist.

8. Sicherheitsscansystem für Handgepäckstücke nach Anspruch 7, wobei das mindestens eine rohrförmige Element mit einem Material mit einer Dichte von mindestens 10 g/cm³, vorzugsweise einer Dichte von mindestens 16 g/cm³, oberflächenbeschichtet ist.

9. Sicherheitsscansystem für Handgepäckstücke nach Anspruch 7 oder 8, wobei das mindestens eine rohrförmige Element mit mindestens einem Material oder einer Materialmischung oberflächenbeschichtet ist, die ausgewählt ist aus der Gruppe, die Gold, Platin, Iridium, Wolfram, Silber, Palladium, Rhodium, Ruthenium und Molybdän umfasst.

10. Sicherheitsscansystem für Handgepäckstücke nach einem oder mehreren der Ansprüche 7 bis 9, wobei das mindestens eine rohrförmige Element mit einer Mehrschichtbeschichtung oberflächenbeschichtet ist, die mindestens eine Schicht eines Materials mit einer Dichte von höchstens 4 g/cm³, und vorzugsweise höchstens 2,5 g/cm³, umfasst, wie beispielsweise mindestens ein Material oder eine Materialmischung, die aus der Gruppe ausgewählt, die Silizium, Borcarbid und Kohlenstoff umfasst.

11. Sicherheitsscansystem für Handgepäckstücke nach einem oder mehreren der Ansprüche 5 bis 10, wobei die Fokussiervorrichtung ein Polykapillarelement umfasst, durch das die Photonen geführt werden.

12. Sicherheitsscansystem für Handgepäckstücke nach einem oder mehreren der Ansprüche 5 bis 11, wobei die Röntgenquelle in dem zweitstufigen Modul eine Nennröhrenspannung von mindestens 110 kV, vorzugsweise mindestens 140 kV, aufweist.

13. Sicherheits-Scansystem für Handgepäckstücke nach einem oder mehreren der Ansprüche 5 bis 12, wobei die Röntgenquelle in dem zweitstufigen Modul luftgekühlt ist und keine Wasserkühlung aufweist.

14. Sicherheits-Scansystem für Handgepäckstücke nach einem oder mehreren der Ansprüche 5 bis 13, wobei der fokussierte Röntgenstrahl an der Messposition eine größte Querschnittsabmessung in dem Bereich von 4 bis 500 µm aufweist.

15. Sicherheitsscansystem für Handgepäckstücke nach einem oder mehreren der Ansprüche 5 bis 14, wobei der mindestens eine zweite Detektor mindestens eine doppelte Energieauflösung, und vorzugsweise eine mehrfache EnergieAuflösung, wie beispielsweise eine Erfassung in 1000 bis 4000 Energiekanälen mit einem anschließenden Binning zu einem Bereich von 100 bis 200 Energieniveaus, aufweist.

## Revendications

1. Procédé de balayage de sécurité d'articles de cabine, comprenant au moins les étapes suivantes consistant à
a) recevoir des articles de cabine,
b) balayer les articles de cabine dans un module de premier étage en utilisant au moins une source de rayons X et des premiers détecteurs pour effectuer une radiographie à contraste de transmission générant des projections de données d'image bidimensionnelles des articles de cabine,
c) reconstituer une représentation tridimensionnelle des articles de cabine,
d) analyser la représentation tridimensionnelle pour déterminer soit que le balayage à l'étape b) fournit un résultat final, soit qu'au moins un volume local dans les articles de cabine nécessite un balayage supplémentaire, dans lequel les articles de cabine à l'étape a) sont reçus en tant que groupe d'articles de cabine sur un support et sont balayés simultanément en tant que groupe à l'étape b), et dans lequel
e) un groupe d'articles de cabine déterminés à l'étape d) pour avoir au moins une zone locale nécessitant un balayage supplémentaire est en outre balayé dans un module de deuxième étage, dans lequel le groupe d'articles de cabine et une source de rayons X et un dispositif de focalisation sont mutuellement positionnés de sorte qu'une position de mesure soit en ligne avec la zone locale nécessitant un balayage supplémentaire, et la source de rayons X émet des photons dans un faisceau de rayons X polychromatique, dont les photons sont focalisés vers la position de mesure par le dispositif de focalisation, et au moins un deuxième détecteur détecte les rayons X diffractés de la zone locale,
**caractérisé en ce que** le dispositif de focalisation ajuste la mise au point de sorte que la position de mesure ait une section transversale plus grande lorsque la zone locale contient des liquides ou des gels que lorsque la zone locale contient une substance solide.

2. Procédé de balayage de sécurité d'articles de cabine selon la revendication 1, dans lequel un troisième détecteur détecte des rayons X dans le faisceau direct provenant de la zone locale.

3. Procédé de balayage de sécurité d'articles de cabine selon la revendication 1 ou 2, dans lequel les photons sont guidés par au moins un élément en forme de tube dans le dispositif de focalisation.

4. Procédé de balayage de sécurité d'articles de cabine selon une ou plusieurs des revendications 1 à 3, dans lequel la source de rayons X et le dispositif de focalisation d'un côté de la position de mesure et au moins un deuxième détecteur au niveau des côtés opposés de la position de mesure sont interconnectés et mobiles en tant qu'unité pendant le positionnement par rapport à une seule zone locale nécessitant un balayage supplémentaire.

5. Système de balayage de sécurité d'articles de cabine (1), comprenant une station d'entrée (2) pour des articles de cabine (4), un module de premier étage (3) ayant au moins une source de rayons X (6) et un premier des détecteurs (7) pour effectuer une radiographie à contraste de transmission générant des projections de données d'image bidimensionnelles des articles de cabine, au moins une unité de traitement (9) connectée opérationnellement auxdits premiers détecteurs, laquelle au moins une unité de traitement est configurée pour reconstruire une représentation tridimensionnelle des articles de cabine et pour analyser la représentation tridimensionnelle pour déterminer s'il y a au moins une zone locale (27) nécessitant un balayage supplémentaire, et un module de deuxième étage (11) pour balayer la zone locale nécessitant un balayage supplémentaire et comprenant des moyens de positionnement et au moins une source de rayons X (21) et au moins un deuxième détecteur (22) pour détecter des rayons X diffractés, dans lequel la station d'entrée pour les articles de cabine est configurée pour recevoir un groupe d'articles de cabine sur un support, et le module de premier étage est configuré pour balayer simultanément le groupe d'articles de cabine sur le support, et dans lequel le module de deuxième étage comprend en outre un dispositif de focalisation (24) situé au niveau de la source de rayons X sur le trajet d'un faisceau de rayons X polychromatique pour focaliser des photons vers une position de mesure (25), et dans lequel les moyens de positionnement sont adaptés pour positionner mutuellement la position de mesure et la zone locale de sorte que la position de mesure soit en ligne avec la zone locale nécessitant un balayage supplémentaire,
**caractérisé en ce que** le dispositif de focalisation est configuré pour régler la mise au point de sorte que la position de mesure ait une section transversale plus grande lorsque la zone locale contient des liquides ou des gels que lorsque la zone locale contient une substance solide.

6. Système de balayage de sécurité d'articles de cabine selon la revendication 5, dans lequel le dispositif de focalisation comprend au moins un élément en forme de tube (40) à travers lequel les photons sont guidés.

7. Système de balayage de sécurité d'articles de cabine selon la revendication 6, dans lequel au moins un élément en forme de tube est revêtu en surface.

8. Système de balayage de sécurité d'articles de cabine selon la revendication 7, dans lequel au moins un élément en forme de tube est revêtu en surface d'un matériau ayant une densité d'au moins 10 g/cm³, de préférence une densité d'au moins 16 g/cm³.

9. Système de balayage de sécurité d'articles de cabine selon la revendication 7 ou 8, dans lequel au moins un élément en forme de tube est revêtu en surface d'au moins un matériau, ou d'un mélange de matériaux, choisi dans le groupe comprenant l'or, le platine, iridium, tungstène, argent, palladium, rhodium, ruthénium et molybdène.

10. Système de balayage de sécurité d'articles de cabine selon une ou plusieurs des revendications 7 à 9, dans lequel au moins un élément en forme de tube est revêtu en surface d'un revêtement multicouche comprenant au moins une couche d'un matériau ayant une densité d'au moins au plus 4 g/cm³, et de préférence au plus 2,5 g/cm³, tel qu'au moins un matériau, ou un mélange de matériaux, choisi dans le groupe comprenant le silicium, le carbure de bore et le carbone.

11. Système de balayage de sécurité d'articles de cabine selon une ou plusieurs des revendications 5 à 10, dans lequel le dispositif de focalisation comprend un élément polycapillaire à travers lequel les photons sont guidés.

12. Système de balayage de sécurité d'articles de cabine selon une ou plusieurs des revendications 5 à 11, dans lequel la source de rayons X dans le module de deuxième étage a une tension nominale de tube d'au moins 110 kV, de préférence d'au moins 140 kV.

13. Système de balayage de sécurité d'articles de cabine selon une ou plusieurs des revendications 5 à 12, dans lequel la source de rayons X dans le module de deuxième étage est refroidie par l'air et est sans refroidissement par l'eau.

14. Système de balayage de sécurité d'articles de cabine selon une ou plusieurs des revendications 5 à 13, dans lequel le faisceau de rayons X focalisé à la position de mesure a une plus grande dimension de section transversale dans la plage de 4 µm à 500 µm.

15. Système de balayage de sécurité d'articles de cabine selon un ou plusieurs des revendications 5 à 14, dans lequel au moins un deuxième détecteur a au moins une résolution à double énergie, et de préférence une résolution à plusieurs énergies, telle qu'une acquisition dans 1000 à 4000 canaux d'énergie avec un regroupement ultérieur dans la plage de 100 à 200 niveaux d'énergie.
